# EUROPÄISCHE PATENTSCHRIFT

(11) **EP 0 584 680 B1**
(45) Veröffentlichungstag und Bekanntmachung des Hinweises auf die Patenterteilung: **27.11.1996**
(21) Anmeldenummer: 93113031.4
(22) Anmeldetag: 13.08.1993
(51) Int. Cl.: B09B 1/00, E02D 3/046

(54) **Tiefenrütteln unter Zugabe von Flüssigstickstoff**
Method and device for deep vibrating with addition of liquid nitrogen
Procédé et dispositif de vibration en profondeur avec addition d'azote liquide

(30) Priorität: 27.08.1992 DE 4228542
(43) Veröffentlichungstag der Anmeldung: 02.03.1994
(73) Patentinhaber: KELLER GRUNDBAU GmbH, D-63067 Offenbach (DE)
(72) Erfinder: Esters, Klaus, Dipl.-Ing., D-45219 Essen (DE)
(74) Vertreter: Zeitler & Dickel

(56) Entgegenhaltungen:
- DE-A- 3 511 556
- GB-A- 2 075 089
- PROSPEKT 10-2D: 'TIEFENRÜTTELVERFAHREN KELLER GRUNDBAU GMBH August 1991

## Beschreibung

Die Erfindung betrifft ein Verfahren zum Verdichten von gewachsenen Böden, Aufschüttungen, insbesondere von Deponien, usw. mittels des Tiefenrüttelns gemäß dem Oberbegriff des Anspruchs 1 sowie eine zur Durchführung des Verfahrens vorgesehene Vorrichtung gemäß dem Oberbegriff des Anspruchs 13.

Es ist bekannt (siehe beispielsweise Prospekt 10-2D der Anmelderin, 8/1991), die Verdichtung von z.B. lose geschütteten Deponien mittels des sog. Tiefenrüttelverfahrens durchzuführen. Dies erfolgt mittels wenigstens eines Tiefenrüttlers, wobei der Deponiekörper bereichsweise nacheinander in Schwingungen versetzt sowie hierdurch verdichtet wird.

Unter Deponien werden hierbei sämtliche möglichen Ablagerungen bzw. Aufschüttungen oder Auffüllungen von Abfallstoffen verstanden, wobei derartige Deponien sowohl als Aufschüttungen wie auch als Verfüllungen von Auskiesungen, Tagebauen usw. angelegt und betrieben werden.

Der grundsätzlich knappe Deponieraum verlangt einen maximalen Nutzungsgrad. Dies bedeutet, daß ein größtmögliches Deponievolumen bei kleinster in Anspruch genommener Fläche zur Verfügung stehen soll.

Beim Betrieb von Deponien sind gleichzeitig die vorhandenen sowie auch noch zu erwartenden Gesetze zum Schutz der Umwelt, insbesondere zum Schutz von Boden und Grundwasser, zu beachten. Dies bedeutet, daß auch entsprechende Deponieeinbauten und Deponiebauwerke, wie Abdichtungsbauwerke, Drainagen, Schacht- und Pumpenstationen, Kontrollgänge usw., erforderlich sind.

Die zur erhöhten Deponienutzung vorgesehene Verdichtung des bisher in Anspruch genommenen Deponieraumes geht einher mit der Forderung gleichmäßiger und möglichst geringer Setzungen für die oben erwähnten Deponieabdichtungseinbauten und -bauwerke.

Um diese Deponieverdichtungsarbeit zu leisten, ist es bekannt, von der jeweiligen Deponieoberfläche aus einen Tiefenrüttler in Tiefen bis zu 30 m und mehr abzuteufen, und zwar durch alle Deponieschichten hindurch sowie durch die zum größten Teil unbekannten Deponieschüttgüter. Dabei werden mittels des Tiefenrüttlers innerhalb des Deponiekörpers häufig Hindernisse angefahren. Außerdem müssen die früheren Fahrebenen für die Deponiefahrzeuge als geringmächtige, aber z.T. hochverdichtete Schichten durchfahren werden.

Beim Durchörtern solcher Hindernisse und vorverdichteter Schichtlagen wird aufgrund der behindernden Widerstände ein großer Anteil der Rüttelenergie in Wärme umgesetzt.

Aufgrund dieser zwangläufig eintretenden physikalischen Erscheinung können sich verschiedene Nachteile ergeben. Diese bestehen zum einen darin, daß der Motor des Tiefenrüttlers durchbrennt bzw. verbrennt. Dies bewirkt einen Ausfall des Rüttlergerätes mit der Folge, den Rüttler als verloren im Boden belassen zu müssen, was aufgrund des beträchtlichen finanziellen Wertes einer Rüttlereinheit naturgemäß unerwünscht ist.

Zum anderen kann es vorkommen, daß die üblicherweise in den Deponien enthaltenen bzw. entstehenden Gase sich entzünden und zu einem Deponiebrand führen.

Zur Verminderung dieser Nachteile ist es schon bekannt, in den jeweiligen Hinderniszonen den Tiefenrüttler derart zu betreiben, daß ein Spülfluid in Form einer Wasser- oder Luftspülung zugegeben wird.

Hierdurch ergeben sich jedoch zwangsläufig weitere - andere - Nachteile. Es tritt nämlich bei einer Wasserspülung die Lösung schädlicher Deponiestoffe mit der Folge der Infiltration im Boden und Grundwasser ein. Demgegenüber erfolgt bei der Anwendung einer Luftspülung naturgemäß eine entsprechend erhöhte Sauerstoffzufuhr, was das Brand- und Explosionsrisiko in unerwünschter Weise steigert. Ohnehin ist bei schwelenden oder schon brennenden Deponien die Anwendung einer Luftspülung ausgeschlossen.

Der Erfindung liegt daher die Aufgabe zugrunde, das Verfahren der gattungsgemäßen Art zur Beseitigung der geschilderten Nachteile derart auszugestalten, daß es ohne nennenswert erhöhte Kosten betriebssicher und umweltverträglich angewendet sowie mit besonderer Wirksamkeit hinsichtlich Spülung, Kühlung usw. durchgeführt werden kann.

Gleichzeitig soll eine einfache Vorrichtung zur Durchführung dieses Verfahrens geschaffen werden.

Diese Aufgabe wird durch die Erfindung mit dem Verfahren gemäß Anspruch 1 sowie mit der Vorrichtung gemäß Anspruch 13 gelöst. Vorteilhafte Ausgestaltungen hiervon sind in den jeweiligen Unteransprüchen angegeben.

Der wesentliche erfindungsgemäße Gedanke liegt in der Anwendung einer Spülung mittels Flüssigstickstoff, der während des Tiefenrüttelns als Spülfluid zugegeben wird.

Flüssigstickstoff steht in großindustriellem Umfang zu einem außerordentlich günstigen Preis zur Verfügung (beispielsweise DM 0,01 bis 0,02/l Flüssigstickstoff), wobei sich ein derartiges Spülfluid besonders gut zur Anwendung im erfindungsgemäß vorgesehenen Sinn eignet, da Stickstoff nicht nur ein farb-, geschmack- und geruchloses Gas ist, sondern sich auch überaus reaktionsträge verhält, so daß von vornherein sämtlichen Anforderungen an Umweltverträglichkeit und Betriebssicherheit Genüge geleistet ist.

Erfindungsgemäß wird der Flüssigstickstoff während des Tiefenrüttelns, sei es kontinuierlich oder diskontinuierlich, zugegeben, wobei dies insbesondere beim Anfahren von Hindernissen in einem Deponiekörper, beim Anfahren von festeren Boden- und Untergrundschichtungen sowie bei einem Ansteigen der Rüttlertemperaturen auf die zugelassenen Grenzwerte erfolgt. Letzteres kann sich infolge von Boden- oder Hinderniswiderständen und/oder beim Auftreffen des Rüttlers auf brennende, schwelende oder sonstige Hochtemperaturbereiche in Deponien ergeben.

Der Flüssigstickstoff wird dem Tiefenrüttler in geeigneter Weise zugegeben, und zwar beispielsweise über eine gesonderte Leitung in den Ringraum zwischen Rüttler und Bohrlochwandung, wobei dann der Flüssigstickstoff bis an den Rüttler geführt wird. Diese Leitung kann starr oder flexibel sein und ist vorzugsweise als isolierte Leitung ausgebildet.

Stattdessen kann die Zugabe des Flüssigstickstoffs auch innerhalb des Rüttlergestänges und/oder des Rüttlernachführrohres erfolgen, oder es kann ein Bypassrohr vorgesehen sein, das mit dem Rüttler und/oder dem Rüttlergestänge und/oder dem Rüttlernachführrohr verbunden ist.

Bei einem vorhandenen offenen Ringraum kann die Zugabe des Flüssigstickstoffs auch direkt von der Bodenoberfläche aus in den Ringraum zwischen dem Rüttler und der Bohrlochwandung erfolgen.

In jedem Fall ist vorgesehen, den Flüssigstickstoff bis in den unmittelbaren Wirkungsbereich des Rüttlers einzubringen, und zwar vorzugsweise derart, daß er an der Rüttlerspitze austritt.

In zweckmäßiger Ausgestaltung der Erfindung ist vorgesehen, die Zugabe des Flüssigstickstoffs nach Menge und/oder Zugabezeit und/oder Temperatur zu steuern.

Die erfindungsgemäße Anwendung von Flüssigstickstoff als Spülfluid beim Tiefenrüttelverfahren ergibt beträchtliche Vorteile. Diese beruhen u.a., jedoch nicht ausschließlich, darauf, daß der in den Boden eingeleitete Flüssigstickstoff aufgrund der Wärmeaufnahme verdampft. Die sich hierbei ergebende Umwandlung des Stickstoffs vom flüssigen in den gasförmigen Aggregatzustand hat außerdem zur Folge, daß sich auf natürliche Weise eine selbsttätige gasförmige Rückführung des flüssig eingeleiteten Stickstoffs zur Bodenoberfläche hin ergibt. Diese Rückführung kann erfindungsgemäß noch durch eine Absaugung des verdampften und als Gas zur Oberfläche hin abströmenden Stickstoffs unterstützt werden. Hierbei kann beispielsweise eine Kaltvergaseranlage zur Anwendung gelangen.

Aufgrund der erfindungsgemäßen Anwendung des Flüssigstickstoffs ergibt sich auf außerordentlich wirkungsvolle Weise die erwünschte Kühlung des Tiefenrüttlers einschließlich dessen Erregermotors sowie sämtlicher hiermit verbundener maschineller Einrichtungen.

Außerdem wird eine wirkungsvolle Kühlung des umgebenden Bodens und Stoffmediums erreicht. Dies hat zur Folge, daß etwa vorhandene Flamm- und Schwelbereiche erstickt werden, so daß keinerlei Brände mehr entstehen können.

Weiterhin wird die Zufuhr von Luft in den umgebenden Boden abgeschnitten, und es werden etwa im Boden vorhandene gasförmige Gemische unterdrückt bzw. verdrängt, so daß entsprechenden Entflamm- und Explosionsrisiken sicher beseitigt werden.

Schließlich ergibt sich auch keinerlei Beeinträchtigung von Sicker- und Grundwässern, da der eingeleitete Flüssigstickstoff nach seiner Verdampfung als Stickstoffgas entweder selbsttätig entweicht oder mittels gesonderter Absaugung nach oben abgeführt werden kann.

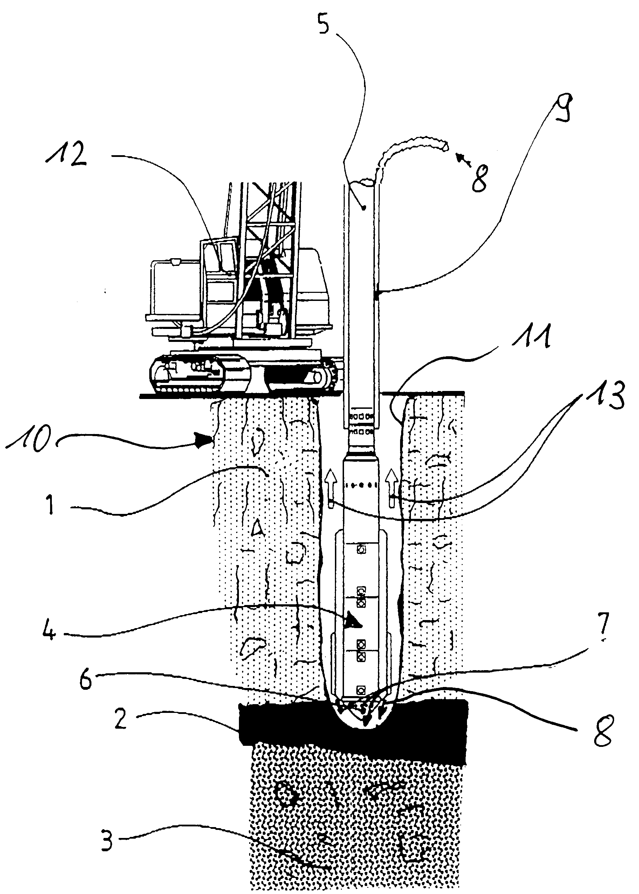

Die Erfindung wird im folgenden anhand der Zeichnung näher erläutert. Diese zeigt in der einzigen Figur schematisch im Vertikalschnitt das Verfahren sowie die Vorrichtung gemäß der Erfindung, d. h. die Durchführung des Tiefenrüttelverfahrens zum Zweck der Deponieverdichtung unter Anwendung einer Flüssigstickstoffspülung.

Wie aus der Zeichnung ersichtlich, soll eine Deponie 10 mittels des Tiefenrüttelverfahrens bereichsweise nacheinander verdichtet werden. Hierbei weist die Deponie 10 an der dargestellten Vertikalschnittstelle beispielsweise eine solche Zusammensetzung auf, daß sie aus einem oberen Deponiekörper 1, einer darunterliegenden Hindernisschicht 2 sowie einem unteren Deponiekörper 3 besteht.

Zur Durchführung des Tiefenrüttelverfahrens gelangt ein an sich bekannter Tiefenrüttler 4 zur Anwendung, der in seinem oberen Bereich ein Rüttlergestänge 5 sowie an seinem unteren Ende eine Rüttlerspitze 6 mit Austrittsöffnungen 7 für Spülfluid 8 aufweist.

Das verwendete Spülfluid 8 ist Flüssigstickstoff, der dem Tiefenrüttler 4 über eine gesonderte isolierte Leitung 9 von der Deponieoberfläche her zugegeben wird, und zwar derart, daß der Flüssigstickstoff 8 über die Austrittsöffnungen 7 an der unteren Rüttlerspitze 6 austritt. An dieser Stelle wirkt der Flüssigstickstoff 8 als Spülfluid sowie als Kühlmittel, wobei aufgrund der sich ergebenden Wärmeaufnahme eine Umwandlung des Flüssigstickstoffs 8 vom flüssigen in den gasförmigen Aggregatzustand erfolgt. Der Flüssigstickstoff 8 tritt somit dann als Stickstoffgas 13 nach oben aus dem zwischen dem Rüttler 4 und der Bohrlochwandung 11 gebildeten Ringraum aus. Sofern diese nicht bereits selbsttätig erfolgt, kann eine gesonderte Absaugung vorgesehen sein.

Wie aus der Zeichnung ersichtlich, ist der Tiefenrüttler 4 an einem üblichen Rüttlertraggerät 12 gehaltert.

Die Erfindung gelangt vorzugsweise beim Verdichten von Deponien zur Anwendung. Sie kann jedoch mit Vorteil auch bei allen gewachsenen Böden, Aufschüttungen usw. eingesetzt werden.

Hinsichtlich vorstehend nicht näher beschriebener Merkmale der Erfindung wird im übrigen ausdrücklich auf die Zeichnung sowie die Ansprüche verwiesen.

## Patentansprüche

1. Verfahren zum Verdichten von gewachsenen Böden, Aufschüttungen, insbesondere Deponien usw., mittels des Tiefenrüttelns, das mittels wenigstens eines Tiefenrüttlers durchgeführt wird und den zu verdichtenden Bodenkörper bereichsweise nacheinander in Schwingungen versetzt sowie hierdurch verdichtet, wobei das Tiefenrütteln unter Zugabe eines Spülfluids erfolgt,
**dadurch gekennzeichnet,**
daß während des Tiefenrüttelns als Spülfluid Flüssigstickstoff (8) zugegeben wird.

2. Verfahren nach Anspruch 1, dadurch gekennzeichnet, daß der als Spülfluid verwendete Flüssigstickstoff (8) über eine gesonderte Leitung (9) in den Ringraum zwischen Rüttler (4) und Bohrlochwandung (11) zugegeben und bis an den Rüttler (4) geführt wird.

3. Verfahren nach Anspruch 1 oder 2, dadurch gekennzeichnet, daß der Flüssigstickstoff (8) innerhalb des Rüttlergestänges (5) und/oder des Rüttlernachführrohres eingegeben wird.

4. Verfahren nach einem der Ansprüche 1 bis 3, dadurch gekennzeichnet, daß der Flüssigstickstoff (8) über ein mit dem Rüttler (4) und/oder dem Rüttlergestänge (5) und/oder dem Rüttlernachführrohr verbundenes Bypassrohr zugegeben wird.

5. Verfahren nach einem der Ansprüche 1 bis 4, dadurch gekennzeichnet, daß der Flüssigstickstoff (8) von der Bodenoberfläche her direkt in den Ringraum zwischen Rüttler (4) und Bohrlochwandung (11) zugegeben wird.

6. Verfahren nach einem der Ansprüche 1 bis 5, dadurch gekennzeichnet, daß der Flüssigstickstoff (8) bis in den unmittelbaren Wirkungsbereich des Rüttlers (4) geführt wird.

7. Verfahren nach einem der Ansprüche 1 bis 6, dadurch gekennzeichnet, daß der Flüssigstickstoff (8) dem Rüttler (4) derart zugeführt wird, daß er an der Rüttlerspitze (6) austritt.

8. Verfahren nach einem der Ansprüche 1 bis 7, dadurch gekennzeichnet, daß der zugegebene Flüssigstickstoff (8) nach Menge und/oder Zugabezeit und/oder Temperatur gesteuert wird.

9. Verfahren nach einem der Ansprüche 1 bis 8, dadurch gekennzeichnet, daß der Flüssigstickstoff (8) diskontinuierlich zugegeben wird.

10. Verfahren nach einem der Ansprüche 1 bis 8, dadurch gekennzeichnet, daß der Flüssigkstickstoff (8) kontinuierlich zugegeben wird.

11. Verfahren nach einem der Ansprüche 1 bis 10, dadurch gekennzeichnet, daß der als Spülfluid zugegebene Flüssigstickstoff (8) nach seiner Verdampfung im Bohrloch als Stickstoffgas (13) abgesaugt wird.

12. Verfahren nach Anspruch 11, dadurch gekennzeichnet, daß der abgesaugte Stickstoff (13), insbesondere in einer Kaltvergaseranlage, aufgefangen wird.

13. Vorrichtung zur Durchführung des Verfahrens nach einem der Ansprüche 1 bis 12, mit einem zur Verdichtung des zu bearbeitenden Bodens vorgesehenen Tiefenrüttler,
**dadurch gekennzeichnet**,
daß der Tiefenrüttler (4) eine gesonderte Spülfluidleitung (9) zur Zufuhr von Flüssigstickstoff (8) in das Bohrloch aufweist.

14. Vorrichtung nach Anspruch 13, dadurch gekennzeichnet, daß die Zufuhrleitung als gesonderte isolierte Leitung (9) am Tiefenrüttler (4) angebracht ist.

15. Vorrichtung nach Anspruch 13, dadurch gekennzeichnet, daß die Zufuhrleitung (9) innerhalb des Rüttlers (4) und/oder des Rüttlergestänges (5) und/oder des Rüttlernachführrohres verläuft.

16. Vorrichtung nach einem der Ansprüche 13 bis 15, dadurch gekennzeichnet, daß die Zufuhrleitung (9) bis an die Rüttlerspitze (6) verläuft und dort in Austrittsöffnungen (7) mündet.

17. Vorrichtung nach einem der Ansprüche 13 bis 16, dadurch gekennzeichnet, daß dem Tiefenrüttler (4) eine Absaugeinrichtung für den im Bohrloch verdampften Stickstoff (13) zugeordnet ist.

## Claims

1. Method of compacting natural soils, banks of earth, in particular dumps etc., by means of immersion vibration which is carried out by means of at least one immersion vibrator and causes the soil to be compacted to vibrate by regions one after the other and thereby compacts it, in which the immersion vibration takes place with the addition of a flushing fluid,
characterised in that
during the immersion vibration liquid nitrogen (8) is added as flushing fluid.

2. Method according to claim 1, characterised in that the liquid nitrogen (8) used as flushing fluid is added along a separate line (9) into the annulus between vibrator (4) and bore hole wall (11) and is fed up to the vibrator (4).

3. Method according to claim 1 or 2, characterised in that the liquid nitrogen (8) is introduced within the vibrator rods (5) and/or the vibrator guide pipe.

4. Method according to one of claims 1 to 3, characterised in that the liquid nitrogen (8) is added along a bypass pipe connected to the vibrator (4) and/or to the vibrator rods (5) and/or to the vibrator guide pipe.

5. Method according to one of claims 1 to 4, characterised in that the liquid nitrogen (8) is added from the soil surface directly into the annulus between vibrator (4) and bore hole wall (11).

6. Method according to one of claims 1 to 5, characterised in that the liquid nitrogen (8) is fed right into the direct area of action of the vibrator (4).

7. Method according to one of claims 1 to 6, characterised in that the liquid nitrogen (8) is fed to the vibrator (4) in such a way that it exits at the vibrator tip (6).

8. Method according to one of claims 1 to 7, characterised in that the liquid nitrogen (8) added is controlled as to amount and/or period of addition and/or temperature.

9. Method according to one of claims 1 to 8, characterised in that the liquid nitrogen (8) is added discontinuously.

10. Method according to one of claims 1 to 8, characterised in that the liquid nitrogen (8) is added continuously.

11. Method according to one of claims 1 to 10, characterised in that the liquid nitrogen (8) added as flushing fluid is after its evaporation in the bore hole exhausted as nitrogen gas (13).

12. Method according to claim 11, characterised in that the exhausted nitrogen (13) is collected, in particular in a cold gasifier plant.

13. Apparatus for implementing the method according to one of claims 1 to 12, with an immersion vibrator designated for the compacting of the soil to be worked,
characterised in that
the immersion vibrator (4) possesses a separate flushing fluid line (9) for the supply of liquid nitrogen (8) into the bore hole.

14. Apparatus according to claim 13, characterised in that the supply line is attached to the immersion vibrator (4) as a separate insulated line (9).

15. Apparatus according to claim 13, characterised in that the supply line (9) runs within the vibrator (4) and/or the vibrator rods (5) and/or the vibrator guide pipe.

16. Apparatus according to one of claims 13 to 15, characterised in that the supply line (9) runs up to the vibrator tip (6) and issues there in outlet openings (7).

17. Apparatus according to one of claims 13 to 16, characterised in that the immersion vibrator (4) is provided with an exhaustion device for the nitrogen (13) evaporated in the bore hole.

## Revendications

1. Procédé pour compacter des sols naturels, des remblais, en particulier des décharges ou similaires, par vibrations en profondeur, que l'on exécute au moyen d'au moins un appareil de vibration en profondeur, et qui met en vibration par zones et successivement les parties du sol à compacter et qui compacte grâce à ceci lesdites parties, la vibration en profondeur ayant lieu avec addition d'un fluide de rinçage,
caractérisé en ce que pendant la vibration en profondeur on ajoute en tant que fluide de rinçage de l'azote liquide (8).

2. Procédé selon la revendication 1, caractérisé en ce que l'azote liquide (8) utilisé comme fluide de rinçage est ajouté via une conduite spéciale (9) jusque dans l'espace annulaire entre le dispositif de vibration (4) et la paroi du forage (11), et est amené jusqu'au dispositif de vibration (4).

3. Procédé selon l'une ou l'autre des revendications 1 et 2, caractérisé en ce que l'azote liquide (8) est introduit à l'intérieur de la tringlerie du dispositif de vibration (5) et/ou le tube de fonçage du dispositif de vibration.

4. Procédé selon l'une quelconque des revendications 1 à 3, caractérisé en ce que l'azote liquide (8) est ajouté via un tube de by-pass relié au dispositif de vibration (4) et/ou à la tringlerie du dispositif de vibration (5) et/ou au tube de fonçage du dispositif de vibration.

5. Procédé selon l'une quelconque des revendications 1 à 4, caractérisé en ce que l'azote liquide (8) est ajouté depuis la surface du sol directement dans l'espace annulaire entre le dispositif de vibration (4) et la paroi du forage (11).

6. Procédé selon l'une quelconque des revendications 1 à 5, caractérisé en ce que l'azote liquide (8) est amené jusque dans la région d'action immédiate du dispositif de vibration (4).

7. Procédé selon l'une quelconque des vibrations 1 à 6, caractérisé en ce que l'azote liquide (8) est amené au dispositif de vibration (4) de manière qu'il sorte à la pointe (6) du dispositif de vibration.

8. Procédé selon l'une quelconque des revendications 1 à 7, caractérisé en ce que l'azote liquide (8) ajouté est commandé quant à sa quantité et/ou à la durée de son addition et/ou à sa température.

9. Procédé selon l'une quelconque des revendications 1 à 8, caractérisé en ce que l'azote liquide (8) est ajouté de manière discontinue.

10. Procédé selon l'une quelconque des revendications 1 à 8, caractérisé en ce que l'azote liquide (8) est ajouté de manière continue.

11. Procédé selon l'une quelconque des revendications 1 à 10, caractérisé en ce que l'azote liquide (8) ajouté comme fluide de rinçage est aspiré après sa vaporisation dans le forage sous forme d'azote gazeux (13).

12. Procédé selon la revendication 11, caractérisé en ce que l'azote aspiré (13) est capté, en particulier dans une installation de vaporisation à froid.

13. Appareil pour mettre en oeuvre le procédé selon l'une quelconque des revendications 1 à 12, comprenant un dispositif de vibration en profondeur prévu pour compacter le sol à traiter, caractérisé en ce que le dispositif de vibration en profondeur (4) comporte une conduite de fluide de rinçage spéciale (9) pour admettre de l'azote liquide (8) dans le forage.

14. Appareil selon la revendication 13, caractérisé en ce que la conduite d'admission est prévue comme conduite isolée spéciale (9) sur le dispositif de vibration en profondeur (4).

15. Appareil selon la revendication 13, caractérisé en ce que la conduite d'admission (9) s'étend à l'intérieur du dispositif de vibration (4) et/ou de la tringlerie du dispositif de vibration (5) et/ou du tube de fonçage du dispositif de vibration.

16. Appareil selon l'une quelconque des revendications 13 à 15, caractérisé en ce que la conduite d'admission (9) s'étend jusqu'à la pointe (6) du dispositif de vibration et débouche dans celle-ci par des ouvertures de sortie (5).

17. Appareil selon l'une quelconque des revendications 13 à 16, caractérisé en ce qu'un dispositif d'aspiration pour l'azote (13) vaporisé dans le forage est associé au dispositif de vibration en profondeur (4).
